# EUROPÄISCHE PATENTSCHRIFT

(11) **EP 2 195 217 B1**
(45) Veröffentlichungstag und Bekanntmachung des Hinweises auf die Patenterteilung: **29.06.2011**
(21) Anmeldenummer: 08802703.2
(22) Anmeldetag: 29.09.2008
(51) Int. Cl.: B60T 8/36

(54) **ELEKTRO-HYDRAULISCHES BREMSAGGREGAT FÜR EIN LANDFAHRZEUG**
ELECTRO-HYDRAULIC BRAKE UNIT FOR A LAND VEHICLE
UNITÉ DE FREINAGE ÉLECTROHYDRAULIQUE POUR UN VÉHICULE ROUTIER

(30) Priorität: 02.10.2007 DE 102007047208
(43) Veröffentlichungstag der Anmeldung: 16.06.2010
(60) Teilanmeldung: 10014506.9
(73) Patentinhaber: Lucas Automotive GmbH, 56070 Koblenz (DE)
(72) Erfinder: KÖTH, Boris, 56191 Weitersburg (DE)
(74) Vertreter: Schmidt, Steffen
(86) Internationale Anmeldenummer: PCT/EP2008/008274
(87) Internationale Veröffentlichungsnummer: WO 2009/046898

(56) Entgegenhaltungen:
- EP-A- 1 795 413
- WO-A-01/28830
- WO-A-95/05543
- WO-A-03/047935
- DE-A1- 10 039 670
- DE-A1- 19 963 760
- DE-A1-102006 033 493
- JP-A- 10 250 568

## Beschreibung

### Bereich

Hier wird ein elektro-hydraulisches Bremsaggregat für ein Landfahrzeug beschrieben. Dabei kann es sich um ein Bremsaggregat in einem hydraulischen, ein- oder mehrkreisigen Bremssystem handeln, das elektrisch zu betätigende Fluidschaltventile, eine elektronische Regel-/ Steuerschaltung (ECU) zum Bereitstellen von Ansteuersignalen für die Fluidschaltventile zum Modulieren des hydraulischen Drucks in den Bremskreisen, eine Fluidförderpumpe und einen Aggregatskörper umfasst, in den hydraulische Verbindungsleitungen zwischen den Fluidschaltventilen eingearbeitet sind.

### Technischer Hintergrund

Das europäische Patent Nr. 0 720 551 B1-BOSCH zeigt eine typische Bauform eines herkömmlichen derartigen Aggregats für schlupfgeregelte Bremsanlagen von Kraftfahrzeugen. Dieses Bremsaggregat hat einen Aggregatskörper aus Leichtmetall mit einer Vielzahl gestufter Aufnahmebohrungen für den hydraulischen Teil elektromagnetisch betätigter Fluidschaltventile. In eine Stufe der Aufnahmebohrung ist jeweils dieser hydraulische Teil eingesetzt und am Aggregatskörper durch Verstemmen befestigt. Ein druckdichter Ventildom, der die magnetisch wirksamen Elemente, wie Anker und Magnetkern, des hydraulischen Teils enthält, steht über den Aggregatskörper hinaus. Ein separat gefertigter elektrischer Teil des Fluidschaltventils, der auf den Ventildom aufgesteckt ist, hat eine diesen umschließende, elektrische Spule sowie ein Magnetfluss leitendes Gehäuse in dem auf der dem Aggregatskörper zugewandten Seite eine weichmagnetische Ringscheibe zum Leiten des Magnetflusses aufgenommen ist.

Die DE 10 2006 033 493 A1 offenbart eine Bremssteuervorrichtung mit einer Steuereinheit, einer hydraulischen Bremseinheit und einem Hubsimulator. Eine erste Einheit der hydraulischen Bremseinheit weist ein verzweigtes Rohrsystem mit Ventilen und Sensoren auf. Der Hubsimulator ist an einer Seitenfläche der ersten Einheit mit Schrauben extern angebracht, so daß Bremsfluid aus einem in der ersten Einheit integrierten Fluidweg auf eine Stirnfläche eines Kolbens des Simulators drücken kann.

Die DE 199 63 760 A1 beschreibt eine hydraulische Fahrzeugbremsanlage, in der alle Komponenten zwischen dem Hauptbremszylinder und den Radbremszylindern in einer Hydraulikeinheit integriert sind. Ein Pedalwegsimulator wird durch ein Trennventil, ein Rückführventil und einen Hydrospeicher verwirklicht.

Weiter offenbart die WO 95/05543 A1 eine Niederdruckspeichervorrichtung für eine Flüssigkeitspumpe. Der Kolben des Druckspeichers weist an einer Stirnseite einen Fortsatz auf, so daß das aus einer in dem Pumpengehäuse vorhandenen Öffnung strömende Fluid an der gesamten Stirnfläche des Kolbens angreifen kann.

### Zugrunde liegendes Problem

Ausgehend von einem herkömmlichen Bremsaggregat soll ein elektro-hydraulisches Bremsaggregat in einem hydraulischen Bremssystem bereitgestellt werden, das - nicht zuletzt zur Einsparung von Kraftstoff - dazu geeignet ist, auf effiziente und kostengünstige Weise eine Regenerativbremsung zu ermöglichen.

Unter Regenerativbremsung ist dabei zu verstehen, dass die beim Bremsvorgang freiwerdende kinetische Energie - anstatt sie in Reibungswärme umzusetzen - wieder in elektrische (potentielle) Energie zurückgewandelt wird. So kann zumindest ein Teil der Bremsenergie wieder zum Aufladen der Fahrzeugbatterie verwendet werden. Die im Kraftfahrzeug benötigte elektrische Energie muss somit nicht mehr vollständig aus Kraftstoff gewonnen werden.

### Lösung

Als Lösung dieses Problems wird ein Bremsaggregat mit den Merkmalen des Anspruchs 1 vorgeschlagen. Dieses elektro-hydraulische Bremsaggregat weist einen Aggregatskörper mit elektro-hydraulischen Komponenten, wie elektrisch zu betätigende Fluidschaltventile, hydraulischen Verbindungsleitungen zwischen diesen Fluidschaltventilen oder dergleichen, eine elektronische Regel-/ Steuerschaltung zum Bereitstellen von Ansteuersignalen für die Fluidschaltventile um den hydraulischen Druck in den Bremskreisen zu modulieren und eine Fluidförderpumpe auf. In den Aggregatskörper ist ein Simulator für regeneratives Bremsen integriert, der zumindest teilweise aus diesem herausragt.

### Vorteile und Weiterbildungen

Erstmals wird ein solches elektro-hydraulisches Bremsaggregat mit teilweise in den Aggregatskörper integriertem Simulator für regeneratives Bremsen bereitgestellt. Dieser Simulator hat eine Simulationseinheit je Bremskreis mit mindestens einer Zylinder-Kolben-Anordnung und mindestens einer Rückstellfederanordnung, die mindestens ein Federelement aufweist. Die Zylinder-Kolben-Anordnung kann dabei einen eine Kammer bildenden Hohlzylinder und einen in diesem verschiebbaren Kolben haben. Die Rückstellfederanordnung kann innerhalb oder außerhalb des Hohlzylinders vorgesehen sein. Jedes Federelement kann eine Druckfeder oder eine Zugfeder sein und eine progressive Federkennlinie haben. Der Kolben teilt den Hohlzylinder in zwei fluiddicht, beispielsweise mit einem Dichtungselement, gegeneinander abgegrenzte Kammern, eine Druckkammer und eine Füllkammer. Jede Kammer hat mindestens einen Zu-/Abflusskanal.

Die teilweise Integration des Simulators in den Aggregatskörper ist durch Ausnehmungen im Aggregatskörper zu realisieren, in die zumindest der hydraulische Teil der Simulationseinheiten, in Form der Zylinder-Kolben-Anordnungen, eingebracht und befestigt ist. Der feder-mechanische Teil, in Form der Rückstellfederanordnungen, kann sich, wie bereits erwähnt, (teilweise) innerhalb des Hohlzylinders befinden oder er kann von außen mit der Zylinder-Kolben-Anordnung gekoppelt sein. Ist Letzteres der Fall, so kann die Rückstellfederanordnung den Aggregatskörper zumindest teilweise überragen.

Bei herkömmlichen Regenerativbremseinheiten kommuniziert das Bremsaggregat über externe Leitungen mit separaten Simulationseinheiten, oder die Simulationseinheiten sind vollständig in den Aggregatskörper integriert. Demgegenüber wird hier zur Lösung des zugrunde liegenden Problems vorgeschlagen, die Simulationseinheiten lediglich teilweise in den Aggregatskörper zu integrieren.

Im Vergleich zur Teilintegration des Simulators, bei der die Simulationseinheiten den Aggregatskörper überragen, sind die Simulationseinheiten bei der vollständigen Integration komplett in den Aggregatskörper eingebettet. Dazu muss der Aggregatskörper größer gestaltet sein und ist somit schwerer. Durch die teilweise Integration des Simulators ergibt sich für den Aggregatskörper eine kompaktere und leichtgewichtigere Bauweise als bei einer vollständigen Integration.

Gegenüber einer Bauweise, bei der der Simulator vom Aggregatskörper abgesetzt ist, reduziert sich der Aufwand an Verrohrung zwischen dem Simulator und dem Aggregatskörper. Durch die teilweise Integration des Simulators in den Aggregatskörper ergibt sich außerdem ein höherer Integrationsgrad. Dies hat unter anderem eine vereinfachte Montage im Fahrzeug und geringere Fehleranfälligkeit zur Folge.

Gegenüber einer Bauweise, bei der die Federanordnungen in den Simulationseinheiten von Hydraulikfluid benetzt sind, die Federanordnungen also von dem Hydraulikfluid umgeben sind, reduziert sich durch die teilweise Integration des Simulators in den Aggregatskörper das Gesamtvolumen des Hydraulikfluids in dem im Bremssystem. Dies kann auch zu einer höheren Steifigkeit des Hydrauliksystems führen. Letzteres kann zu verbesserten Regelungseigenschaften des Bremssystems führen.

Die unterschiedlichen Ausführungsmöglichkeiten des beschriebenen Bremsaggregats eröffnen außerdem auch neue Möglichkeiten, den zur Verfügung stehenden Bauraum effizient zu nutzen.

Der Hohlzylinders der Zylinder-Kolben-Anordnung, der zum Boden der Ausnehmung hin offen oder abgeschlossen sein kann, kann fluiddicht, beispielsweise mit einem Dichtungselement, zur innenseitigen Mantelfläche der Ausnehmung in den Aggregatskörper eingesetzt sein.

Befindet sich der feder-mechanische Teil außerhalb des Hohlzylinders, kann der innerhalb der Zylinder-Kolben-Anordnung verschiebbare Kolben, auf der dem Boden der Ausnehmung im Aggregatskörper abgewandten Seite, fest mit einer Betätigungsstange verbunden sein. Diese kann fluiddicht, beispielsweise mit einem Dichtungselement, durch eine Öffnung in der dem Boden der Ausnehmung gegenüberliegenden Fläche des Hohlzylinders geführt sein und sich außerhalb fortsetzen. In diesem Fall ist der aus der Zylinder-Kolben-Anordnung herausragende Teil der Betätigungsstange mit einer lösbaren Anordnung verbunden, die die Rückstellfederanordnung mit der Zylinder-Kolben-Anordnung koppelt. Die

Rückstellfederanordnung kann die Betätigungsstange umgebend angeordnet sein. Sie liegt einerseits direkt oder indirekt, d.h. über ein eingebrachtes Element, am Aggregatskörper und/oder am Hohlzylinder an. Dieses Element kann einen Ringbund aufweisen um die Rückstellfederanordnung relativ zur Betätigungsstange in Position zu halten. Andererseits ist sie durch die im folgenden erläuterte lösbare Anordnung begrenzt.

Die Betätigungsstange ist an ihrem herausragenden Ende mit einem Gewinde versehen. Diese Anordnung, bestehend aus einem aufschraubbaren Element und einer Begrenzungsplatte, kann über dieses Gewinde mit der Betätigungsstange verbunden sein. Die Begrenzungsplatte hat eine Öffnung durch die die Betätigungsstange geführt ist. Sie wird durch die anliegende Federkraft an oder auf dieses aufgeschraubte Element gedrückt. Diese Begrenzungsplatte kann z.B. einen Ringbund aufweisen, der die Rückstellfederanordnung relativ zur Betätigungsstange in Position hält.

Der Kolben der Zylinder-Kolben-Anordnung kann in zwei Endstellungen bewegt werden. Ist die Rückstellfederanordnung entspannt, d.h. es wirkt keine oder keine nennenswerte Federkraft auf den Kolben, so ist das Volumen der Druckkammer maximal und das Volumen der Füllkammer minimal. Liegt die volle Federkraft an den Kolben an, so ist das Füllkammervolumen maximal und das der Druckkammer minimal.

Der Aggregatskörper weist zudem ein an die Zylinder-Kolben-Anordnung angeschlossenes System von Fluidleitungen auf. Im in die Ausnehmung im Aggregatskörper eingebauten Zustand fluchten die Zu-/Abflusskanäle des Hohlzylinders mit den in diese Ausnehmung mündenden Fluidleitungen.

Dieses in die Ausnehmung mündende Fluidleitungssystem weist mindestens eine Fluidleitung mit einem Fluidschaltventil je Kammer der Zylinder-Kolben-Anordnung auf. Die Fluidschaltventile können durch die elektronische Steuerung geschaltet werden. Durch die Fluidleitungen kann Hydraulikfluid aus der Kammer heraus und in die Kammer hinein fließen.

Jede Fluidleitung oder jeder der Zu-/Abflusskanäle des Hohlzylinders kann wenigstens eine Drosseleinrichtung umfassen. Mit Hilfe der Drosseleinrichtung in der in die Druckkammer mündenden Fluidleitung lässt sich erreichen, dass bei einer Kolbenbewegung in Richtung Druckkammer das Hydraulikfluid aus der Druckkammer unter strömungsmechanischem Widerstand herauspressbar ist. Die Drosseleinrichtung kann auch, zum Beispiel elektromechanisch oder elektromagnetisch, verstellbar sein, um den der Kolbenbewegung entgegenwirkenden Widerstand einzustellen. Bei einer Bewegung des Kolbens im Sinne einer Volumenverringerung der Druckkammer, kann die Drosseleinrichtung in der in die Druckkammer mündenden Fluidleitung wirksam werden und somit die Kolbenbewegung dämpfen. Sie kann gleichermaßen auch bei einer Kolbenbewegung im Sinne einer Volumenvergrößerung der Druckkammer unter Wirkung der Rückstellfederanordnung wirksam werden und somit ein Zurückströmen von Hydraulikfluid in die Druckkammer dämpfen. Ist Letzteres unerwünscht, so kann die Fluidleitung einen Bypass-Kanal umfassen, welcher die Fluidleitung mit Drosseleinrichtung (=Drosselkanal) umgeht. Beispielsweise kann hierbei vorgesehen sein, dass der Bypass-Kanal ein Rückschlagventil aufweist, welches ein Eintreten von Hydraulikfluid in die Druckkammer im wesentlichen ungehindert zulässt und ein Austreten von Hydraulikfluid aus der Druckkammer blockiert. Bei dieser Lösung öffnet sich das Rückschlagventil lediglich dann, wenn sich der Kolben unter Wirkung der Rückstellfederanordnung in Richtung Füllkammer bewegt. Aufgrund des weitgehend ungehinderten Einströmens von Hydraulikfluid bewegt sich somit der Kolben unter Wirkung der Federkraft verhältnismäßig schnell in die Stellung zurück, in der die Rückstellfederanordnung entspannt ist. Die Bewegungscharakteristik bei einer Bewegung des Kolbens im Sinne einer Volumenverringerung der Druckkammer wird jedoch durch den Bypass-Kanal mit Rückschlagventil nicht beeinflusst, da das Rückschlagventil bei einer derartigen Betätigung schließt. Letztendlich wird durch eine Parallelschaltung des Drosselkanals und des Bypass-Kanals mit dem Rückschlagventil der Bewegungscharakteristik des Kolbens eine Hysterese überlagert.

Der aus dem Aggregatskörper herausragende Teil des Simulators ist durch ein ein- oder mehrteiliges Gehäuse abdeckbar. Dies schützt vor Umwelteinflüssen, so dass Verschleiß, beispielsweise durch Korrosion, reduziert werden kann.

Die einzelnen Simulationseinheiten des teilweise im Aggregatskörper integrierten Simulators können als vormontierte, einzeln handhabbare Baugruppen ausgestaltet werden, die in die entsprechend gestalteten Ausnehmungen im Aggregatskörper einzufügen sind. Eine solche Baugruppe besteht aus einem Hohlzylinder, der entsprechend dem Fluidleitungssystem im Aggregatskörper einen oder mehrere Ab-/Zuflusskanäle und einen in ihm verschiebbaren Kolben aufweist. Dieser Kolben teilt den Hohlzylinder in zwei fluiddicht, beispielsweise mit einem Dichtungselement, gegeneinander abgetrennte Kammern. Der Kolben weist im Falle einer außerhalb des Hohlzylinders liegenden Rückstellanordnung eine fest mit ihm verbundene Betätigungsstange aufweist, die fluiddicht, beispielsweise mit einem Dichtungselement, durch eine Öffnung im Hohlzylinder geführt ist. Befindet sich hingegen die Rückstellfederanordnung im Hohlzylinder, so ist diese in einer Kammer angeordnet.

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist.

### Kurzbeschreibung der Figuren

Fig. 1 zeigt eine schematische Darstellung eines Bremssystems mit einem solchen elektro-hydraulischen Bremsaggregat.
Fig. 2 a zeigt vier schematische Ansichten eines ersten Ausführungsbeispiels des beschriebenen elektro-hydraulischen Bremsaggregats. Fig. 2b, c, d zeigen drei weitere Ausführungsbeispiele dieses elektro-hydraulischen Bremsaggregats in jeweils zwei schematischen Ansichten.
Fig. 3 zeigt eine schematische Querschnittsansicht einer in eine Ausnehmung im Aggregatskörper teilintegrierten Simulationseinheit.

### Detaillierte Beschreibung eines möglichen Ausführungsbeispiels

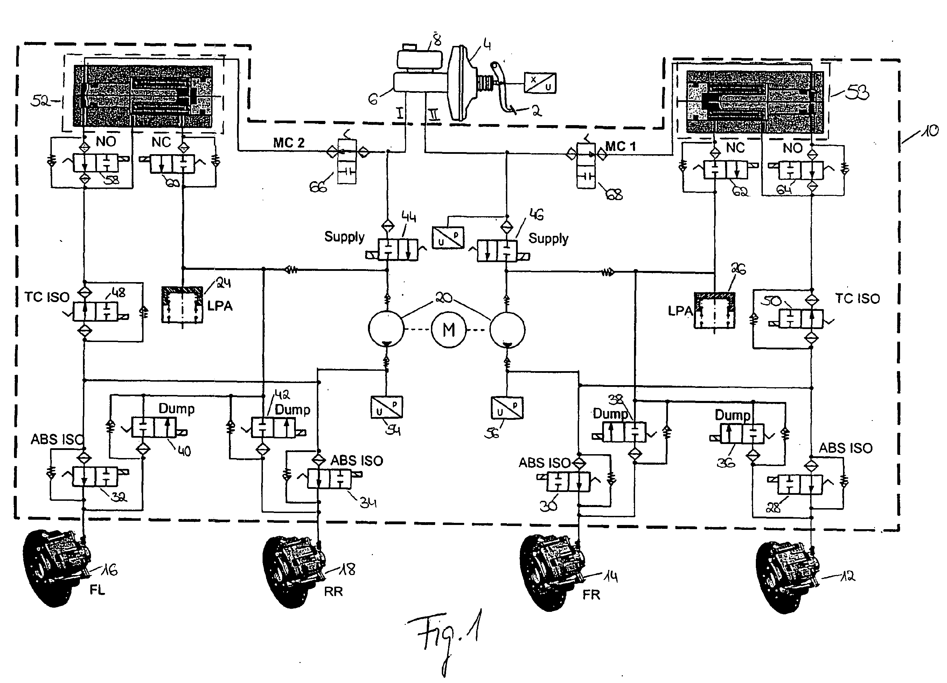

Fig. 1 zeigt eine schematische Darstellung eines Hydrauliksystems.

Ein von einem Fahrer zu betätigendes Bremspedal 2 betätigt ein Eingangsglied eines pneumatischen Bremskraftverstärkers 4, dessen Ausgangsglied auf eine Druckstange eines Hauptbremszylinders 6 wirkt. Der Hauptbremszylinder 6 hat eine erste und eine zweite Zylinderkammer, die beide mit einem Hydraulikreservoir 8 kommunizieren. Die beiden Zylinderkammern sind durch einen Zwischenkolben voneinander getrennt und speisen beide jeweils einen Bremskreis I, II mit einem elektro-hydraulischen Bremsaggregat 10.

Die beiden Bremskreise I, II umfassen bei einer X-Bremskraftaufteilung einerseits den Bremszylinder 12 des linken Hinterrades und den Bremszylinder 14 des rechten Vorderrades und andererseits den Bremszylinder 16 des linken Vorderrades und den Bremszylinder 18 des rechten Hinterrades. Neben den Radbremszylindern 12, 14, 16, 18 sind die zugehörigen Bremsscheiben dargestellt.

In dem elektro-hydraulischen Bremsaggregat 10 sind eine zweikreisige Fluidförderpumpe 20, Niederdruckspeicherkammern 24, 26, Fluidschaltventile 28, 30, 32, 34, 36, 38, 40, 42, 44, 46, 58, 60, 62, 64, 66, 68 und Hochdruckfluidschaltventile 48, 50 vorgesehen. Zudem weist das elektro-hydraulische Bremsaggregat 10 einen Simulator für regeneratives Bremsen 52, 53 auf. Das elektro-hydraulische Bremsaggregat 10 ist so ausgelegt, dass eine radindividuelle Ansteuerung basierend auf Signalen aus Raddrehzahlsensoren und Drucksensoren 54, 56 beispielsweise durch die individuelle Ansteuerung der Fluidschaltventile 28, 30, 32, 34, 36, 38, 40, 42 zu erreichen ist; eine bremskreisspezifische Ansteuerung ist beispielsweise durch den Simulator für regeneratives Bremsen 52, 53 und die Ansteuerung der Fluidschaltventile 44, 46, 58, 60, 62, 64, der Hochdruckfluidschaltventile 48, 50 oder der zweikreisigen Fluidförderpumpe 20 zu erreichen. Die dafür erforderlichen Ansteuersignale stellt die ECU bereit.

Im Regenerativbremsbetrieb sind die Fluidschaltventile 28, 30, 32, 34, 60, 62, 66, 68 geöffnet und die Fluidschaltventile 36, 38, 40, 42, 44, 46, 48, 50, 58, 64 geschlossen. Durch die geöffneten Fluidschaltventile 66, 68 gelangt Hydraulikfluid in die Füllkammern des Simulators 52, 53. Entsprechend der Volumenzunahme in der Füllkammer wird aus der Druckkammer Hydraulikfluid verdrängt. Dieses gelangt durch die geöffneten Fluidschaltventile 60, 62 in die Niederdruckspeicherkammern 24, 26. Somit steht für einen Bremsvorgang, bei dem der Bremswunsch das durch die elektrischen Maschinen des Fahrzeuges aufnehmbare Bremsmoment übersteigt, unmittelbar Hydraulikfluid an der Fluidförderpumpe 20 an, so dass die Reibungsbremsen an den Rädern des Fahrzeugs mit Druck beaufschlagt werden können.

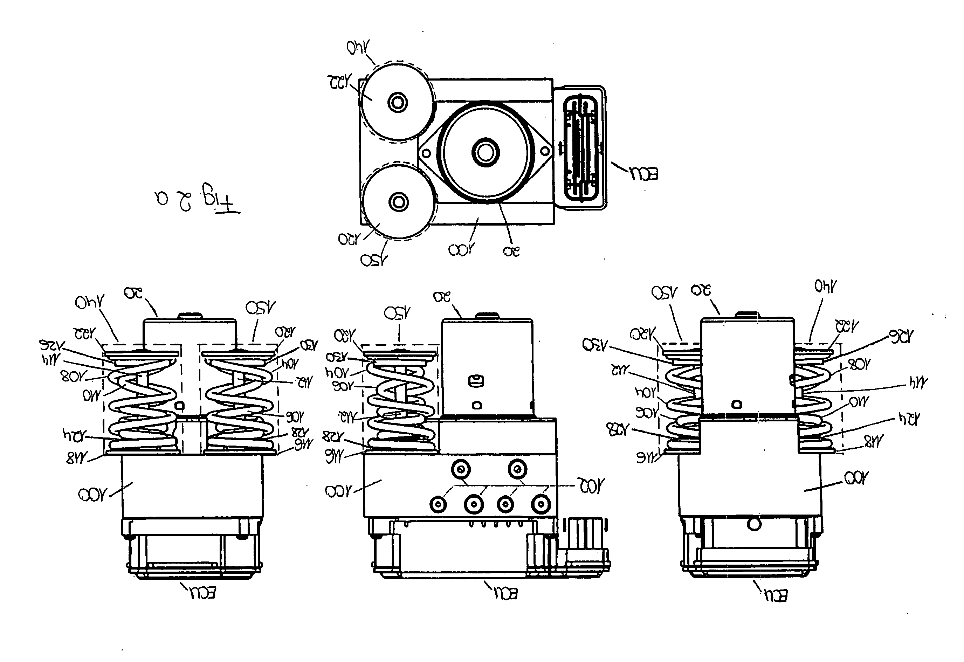

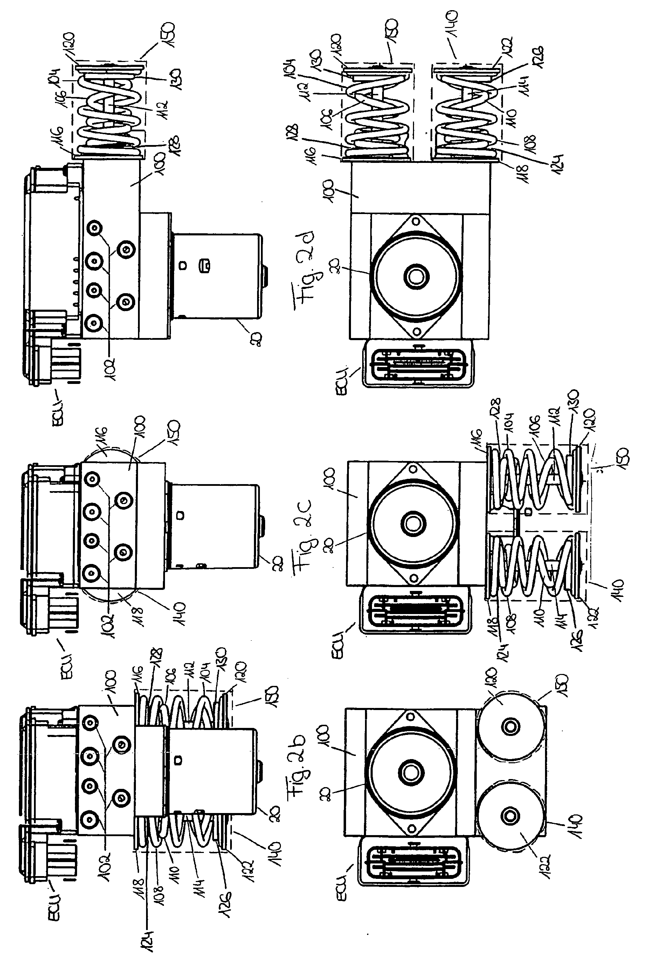

In Fig. 2a, b, c, d sind vier Ausführungsbeispiele eines elektro-hydraulischen Bremsaggregats 10 in ihrem strukturellen Aufbau veranschaulicht.

Ersichtlich hat das elektro-hydraulische Bremsaggregat 10 aus Fig. 2a, ebenso wie die Ausführungsbeispiele aus den Fig. 2b, c, d, einen kompakten Aufbau. Es ist für ein hydraulisches, zweikreisiges Bremssystem eines Landfahrzeuges ausgelegt und weist einen Aggregatskörper 100 mit den in Fig. 1 veranschaulichten Komponenten auf, die jedoch in den Fig. 2a, b, c, d nicht weiter dargestellt sind.

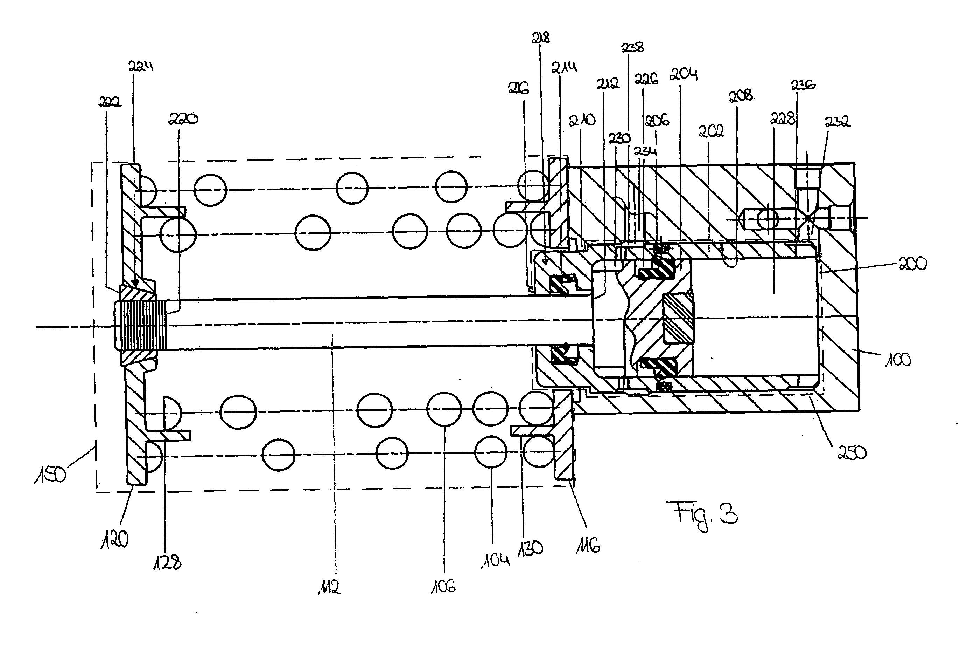

Des weiteren ist der teilweise in den Aggregatskörper 100 integrierte Simulator für regeneratives Bremsen 52, 53 aus Fig. 1 mit zwei Simulationseinheiten dargestellt. Beide Simulationseinheiten weisen hier vollständig in den Aggregatskörper 100 eingebrachte Zylinder-Kolben-Anordnungen auf, welche mit aus dem Aggregatskörper 100 herausragenden, nach außen sichtbaren Rückstellfederanordnungen 140, 150 gekoppelt sind. Eine dieser Simulationseinheiten wird unter Bezugnahme auf Fig. 3 näher erläutert.

Die Rückstellfederanordnungen 140, 150 dieser Simulationseinheiten weisen jeweils zwei einander umgebende Federelemente 104, 106; 108, 110 auf. Die Rückstellfederanordnungen 140,150 sind jeweils Betätigungsstangen 112, 114 umgebend angeordnet. Diese Betätigungsstangen 112, 114 sind mit den Zylinder-Kolben-Anordnungen verbunden. Die Federelemente 104, 106; 108, 110 liegen über ein ringförmiges Element 116, 118, durch dessen Ringbund 124, 128 die Federelemente 104, 106; 108, 110 relativ zur Betätigungsstange 112, 114 in Position gehalten werden, am Aggregatskörper 100 an. Sie liegen an einem weiteren ringförmigen Element 120, 122 an, das mit dem Ende der aus dem Aggregatskörper 100 herausragenden Betätigungsstange 112, 114 verbunden ist. Dieses Element 120, 122 weist ebenfalls einen Ringbund 126, 130 auf, über den die Federelemente 104, 106; 108, 110 relativ zur Betätigungsstange 112, 114 in Position gehalten werden.

Fig. 3 zeigt eine schematische Querschnittsansicht einer der beiden Simulationseinheiten. Eine der beiden Simulationseinheiten wird im folgenden näher beschrieben.

Die dargestellte Simulationseinheit 150, 250 ist in eine Ausnehmung 200 im Aggregatskörper 100 teilintegriert und weist eine Zylinder-Kolben-Anordnung 250 und eine mit ihr gekoppelte Rückstellfederanordnung 150 auf. Diese Rückstellfederanordnung 150 ist außerhalb der Zylinder-Kolben-Anordnung 250 angeordnet und ragt aus dem Aggregatskörper 100 heraus.

Die Zylinder-Kolben-Anordnung 250 umfasst einen Hohlzylinder 202, einen in diesem verschiebbaren Kolben 204 und eine mit diesem Kolben 204 fest verbundene Betätigungsstange 112. Der Hohlzylinder 202 ist hier zum Boden der Ausnehmung 200 hin offen. Die Zylinder-Kolben-Anordnung 250 ist in eine Ausnehmung 200 im Aggregatskörper 100 eingebracht. Sie schließt fluiddicht, über ein ringförmiges Dichtungselement 206, mit der innenseitigen Mantelfläche 208 der Ausnehmung 200 ab. Durch Verstemmen des Randes 210 dieser Ausnehmung 200 im Aggregatskörper 100 ist die eingebrachte Zylinder-Kolben-Anordnung 250 unverlierbar und fluiddicht befestigt.

Die Betätigungsstange 112 ist mit der vom Boden der Ausnehmung 200 abgewandten Seite 212 des Kolbens 204 fest verbunden. Sie ist fluiddicht, mit einem ringförmigen Dichtungselement 214, durch eine Öffnung 216 des Hohlzylinders 202 geführt und setzt sich außerhalb fort. Diese Öffnung 216 befindet sich in der dem Boden der Ausnehmung 200 gegenüberliegenden Fläche 218.

Die Rückstellfederanordnung 150 weist hier zwei sich umgebende Druckfedern 104,106 auf. Sie ist um den aus der Zylinder-Kolben-Anordnung 250 herausragenden Teil der Betätigungsstange 112 angeordnet. Die Rückstellfederanordnung 150 liegt an dem Aggregatskörper 100 an und ist mit der Betätigungsstange 112 lösbar verbunden. In diesem Ausführungsbeispiel liegt sie nicht direkt am Aggregatskörper 100 an, sondern indirekt. Hierzu ist ein ringförmiges Element 116 zwischen der Rückstellfederanordnung 150 und dem Aggregatskörper 100 eingebracht. Dieses weist einen Ringbund 130 auf, der die Federelemente 104, 106 relativ zur Betätigungsstange 112 in Position hält. Der aus dem Hohlzylinder 202 herausragende Teil der Betätigungsstange 112 ist an dessen Ende mit einem Gewinde 220 versehen, auf das ein konischer Ring 222 aufgeschraubt ist. Die Federelemente 104, 106 drücken eine hier ringförmige Platte 120 auf den konischen Ring 222. Damit ist die Rückstellfederanordnung 150 mit der Zylinder-Kolben-Anordnung 250 gekoppelt. Die ringförmige Platte 120 weist eine Öffnung 224 mit konischen Rand auf, durch die die Betätigungsstange 112 geführt ist. Außerdem hat sie einen Ringbund 128, über den die Federelemente 104, 106 relativ zur Betätigungsstange 112 in Position gehalten werden.

Der Kolben 204 der Zylinder-Kolben-Anordnung 250 teilt den Hohlzylinder 202 in zwei fluiddicht, über ein ringförmiges Dichtungselement 226, gegeneinander abgeschlossene Kammern, die Druckkammer 228 und die Füllkammer 230.

Die Simulationseinheit 150, 250 ist an ein in den Aggregatskörper 100 eingearbeitetes System von Fluidleitungen 232, 234 angeschlossen. In jede Kammer 228, 230 mündet eine Fluidleitung 232, 234 mit Fluidschaltventil. Die Fluidschaltventile sind in Fig. 3 nicht dargestellt. Sie können über die ECU gesteuert werden und über die Fluidleitungen 232, 234 kann Hydraulikfluid aus den Kammern 228, 230 heraus und in die Kammern 228, 230 hinein fließen. Hierfür weist der Hohlzylinder 202 je Kammer 228, 230 einen Zu-/Abflusskanal 236, 238 auf, der sich im in den Aggregatskörper 100 eingebauten Zustand mit den in die Ausnehmung 200 mündenden Fluidleitungen 232, 234 deckt. Diese Zu-/Abflusskanäle 236, 238 sind in Form von ringförmigen Ausnehmungen in der Außenwand des Hohlzylinders mit mehreren Durchbrüchen in die Kammern 228, 230 realisiert.

Betätigt der Fahrer im Regenerativbremsbetrieb das Bremspedal, wird das Fluidschaltventil in der in die Füllkammer 230 mündenden Fluidleitung 234 in seine offene Stellung gebracht und die Füllkammer 230 füllt sich. Dieses Fluidschaltventil wird in Fig. 3 nicht dargestellt; es entspricht einem der Fluidschaltventile 66, 68 aus Fig. 1. Der Kolben 204 wird durch das steigende Volumen in der Füllkammer 230 in dem Sinne bewegt, dass sich das Volumen der Druckkammer 228 verringert. Die Druckfedern 104, 106 der Rückstellfederanordnung 150 werden dabei komprimiert.

Wird das Fluidschaltventil im in die Füllkammer 230 mündenden Kanal 234 geöffnet, so bewegt sich der Kolben 204 im Hohlzylinder 202 unter Wirkung der Rückstellfederanordnung 150 in dem Sinne, dass sich das Volumen der Füllkammer 230 verringert. Das in die Füllkammer 230 eingeflossene Hydraulikfluid wird über die Fluidleitung 234 hinausgedrückt. Die durch die Kolbenbewegung im Sinne einer Volumenverringerung der Füllkammer 230 vergrößerte Druckkammer 228 füllt sich wieder mit Hydraulikfluid.

Die teilweise im Aggregatskörper 100 integrierte Zylinder-Kolben-Anordnung 250 ist als vormontierte, einzeln handhabbare Baugruppe ausgestaltet, die in eine Ausnehmung 200 im Aggregatskörper 100 einzufügen ist. Der Hohlzylinder 202 der Zylinder-Kolben-Anordnung 250 weist den in ihm verschiebbaren Kolben 204 auf. Der Kolben 204 ist fest mit der Betätigungsstange 112 verbunden. Diese Betätigungsstange 112 ist fluiddicht, mit dem ringförmigen Dichtungselement 214, durch die Öffnung 216 im Hohlzylinder 202 geführt. Der Kolben 204 teilt den Hohlzylinder 202 in zwei fluiddicht, über das ringförmige Dichtungselement 226, gegeneinander abgetrennte Kammern 228, 230. Des weiteren weist der Hohlzylinder 202 je Kammer 228, 230 einen Zu-/Abflusskanal 236, 238 auf. Diese Zu-/Abflusskanäle 236, 238 decken sich im in den Aggregatskörper 100 eingebauten Zustand mit den in die Ausnehmung 200 mündenden Fluidleitungen 232, 234.

## Patentansprüche

1. Ein elektro-hydraulisches Bremsaggregat (10), für ein hydraulisches, ein- oder mehrkreisiges Bremssystem für regeneratives Bremsen eines Landfahrzeuges, mit
• einem Aggregatskörper (100), welcher elektro-hydraulische Komponenten, wie elektrisch zu betätigende Fluidschaltventile (28, 30, 32, 34, 36, 38, 40, 42, 44, 46, 48, 50, 58 60, 62, 64, 66, 68) aufweist,
• einer Fluidförderpumpe (20) mit Pumpenantriebsmotor oder dergleichen und
• einer elektronischen Regel-/ Steuerschaltung (ECU) zum Bereitstellen von Ansteuersignalen für die elektro-hydraulischen Komponenten zum Modulieren des hydraulischen Bremskreisdrucks,
**dadurch gekennzeichnet, dass** in dem Aggregatskörper (100) ein Simulator (52, 53) integriert ist, der teilweise aus dem Aggregatskörper (100) herausragt,
und dass der Simulator (52, 53) wenigstens eine Simulationseinheit (150, 250) aufweist, die eine Zylinder-Kolben-Anordnung (250) und eine Rückstellfederanordnung (150) umfasst, wobei jede Simulationseinheit (150, 250) teilweise in einer Ausnehmung (200) im Aggregatskörper (100) angeordnet ist, und wobei die Rückstellfederanordnung (150) außerhalb der Zylinder-Kolben-Anordnung (250) angeordnet ist und aus dem Aggregatskörper herausragt.

2. Elektro-hydraulisches Bremsaggregat (10) nach Anspruch 1, **dadurch gekennzeichnet, dass** die Zylinder-Kolben-Anordnung (250) umfasst:
• einen Hohlzylinder (202),
• einen im Hohlzylinder (202) verschiebbaren Kolben (204), der diesen in zwei Kammern (228, 230) teilt, und
• mindestens einen Zu-/Abflusskanal (236, 238) je Kammer (228, 230).

3. Elektro-hydraulisches Bremsaggregat (10) nach Anspruch 1 oder 2, **dadurch gekennzeichnet, dass** die Rückstellfederanordnung (150) mindestens ein Federelement (104, 106) aufweist.

4. Elektro-hydraulisches Bremsaggregat (10) nach Anspruch 2, **dadurch gekennzeichnet, dass** die Rückstellfederanordnung (150) außerhalb des Hohlzylinders (202) angeordnet ist.

5. Elektro-hydraulisches Bremsaggregat (10) nach Anspruch 2, **dadurch gekennzeichnet, dass** der Kolben (204) mit einer Betätigungsstange (112) verbunden ist, die fluiddicht durch eine Öffnung (216) im Hohlzylinder (202) geführt ist und sich außerhalb des Hohlzylinders (202) fortsetzt.

6. Elektro-hydraulisches Bremsaggregat (10) nach Anspruch 5, **dadurch gekennzeichnet, dass** der aus dem Hohlzylinder (202) herausragende Teil der Betätigungsstange (112) mit einer lösbaren Anordnung (120, 122) versehen ist um die Rückstellfederanordnung (150) über die Betätigungsstange (112) mit der Zylinder-Kolben-Anordnung (250) zu koppeln.

7. Elektro-hydraulisches Bremsaggregat (10) nach Anspruch 6, **dadurch gekennzeichnet, dass** die lösbare Anordnung (120, 222) umfasst
• ein Gewinde aufweisendes Element (222) und
• eine Begrenzungsplatte (120), die eine Öffnung (224) hat, durch die die Betätigungsstange (112) geführt ist.

8. Elektro-hydraulisches Bremsaggregat (10) nach Anspruch 6 und 7, **dadurch gekennzeichnet, dass** das herausragende Ende der Betätigungsstange (112) mit einem Gewinde (220) versehen ist, über das die lösbare Anordnung (120, 222) mit der Betätigungsstange (112) verbunden ist.

9. Elektro-hydraulisches Bremsaggregat (10) nach Anspruch 1, **dadurch gekennzeichnet, dass** der Aggregatskörper (100) Fluidleitungen aufweist, die in die Ausnehmung (200) münden.

10. Elektro-hydraulisches Bremsaggregat (10) nach Anspruch 2 und 9, **dadurch gekennzeichnet, dass** sich die Zu-/Abflusskanäle (236, 238) im Hohlzylinder (202) im in den Aggregatskörper (100) eingebauten Zustand mit in die Ausnehmung (200) mündenden Fluidleitungen (232, 234) decken.

11. Elektro-hydraulisches Bremsaggregat (10) nach Anspruch 10, **dadurch gekennzeichnet, dass** jede in die Ausnehmung mündende Fluidleitung (232, 234) wenigstens eine Drosseleinrichtung umfasst, die, insbesondere elektromechanisch oder elektromagnetisch, verstellbar ist.

12. Elektro-hydraulisches Bremsaggregat (10) nach Anspruch 11, **dadurch gekennzeichnet, dass** jede Fluidleitung (232, 234) einen Bypass-Kanal umfasst, welcher diese Fluidleitung (232, 234) mit Drosseleinrichtung umgeht.

13. Elektro-hydraulisches Bremsaggregat (10) nach Anspruch 12, **dadurch gekennzeichnet, dass** zumindest einer der Bypass-Kanäle ein Rückschlagventil aufweist, welches ein Eintreten von Hydraulikfluid in die Druckkammer (228) im wesentlichen ungehindert zulässt und ein Austreten von Hydraulikfluid blockiert.

14. Elektro-hydraulisches Bremsaggregat (10) nach den vorangegangenen Ansprüchen, **dadurch gekennzeichnet, dass** der teilweise in den Aggregatskörper (100) integrierte Simulator (52, 53) durch ein ein- oder mehrteiliges Gehäuse abgedeckt ist.

## Claims

1. An electrohydraulic brake unit (10), for a hydraulic, single- or multiple-circuit brake system for regenerative braking of a land vehicle, having
- a unit body (100) comprising electrohydraulic components, such as electrically actuable fluid control valves (28, 30, 32, 34, 36, 38, 40, 42, 44, 46, 48, 50, 58, 60, 62, 64, 66, 68),
- a fluid feed pump (20) with pump drive motor or the like and
- an electronic closed-/open-loop control circuit (ECU) for supplying trigger signals for the electrohydraulic components in order to modulate the hydraulic brake circuit pressure,
**characterized in that** a simulator (52, 53), which partially projects out of the unit body (100), is integrated in the unit body (100),
and that the simulator (52, 53) comprises at least one simulation unit (150, 250), which comprises a cylinder/piston arrangement (250) and a resetting spring arrangement (150), wherein each simulation unit (150, 250) is disposed partially in a recess (200) in the unit body (100), and wherein the resetting spring arrangement (150) is disposed outside of the cylinder/piston arrangement (250) and projects out of the unit body.

2. Electrohydraulic brake unit (10) according to claim 1, **characterized in that** the cylinder/piston arrangement (250) comprises:
- a hollow cylinder (202),
- a piston (204), which is displaceable in the hollow cylinder (202) and divides the hollow cylinder into two chambers (228, 230), and
- at least one in-/outflow channel (236, 238) per chamber (228, 230).

3. Electrohydraulic brake unit (10) according to claim 1 or 2, **characterized in that** the resetting spring arrangement (150) comprises at least one spring element (104, 106).

4. Electrohydraulic brake unit (10) according to claim 2, **characterized in that** the resetting spring arrangement (150) is disposed outside of the hollow cylinder (202).

5. Electrohydraulic brake unit (10) according to claim 2, **characterized in that** the piston (204) is connected to an actuating rod (112), which extends in a fluid-proof manner through an opening (216) in the hollow cylinder (202) and continues outside of the hollow cylinder (202).

6. Electrohydraulic brake unit (10) according to claim 5, **characterized in that** the part of the actuating rod (112) that projects out of the hollow cylinder (202) is provided with a detachable arrangement (120, 122) for connecting the resetting spring arrangement (150) by the actuating rod (112) to the cylinder/piston arrangement (250).

7. Electrohydraulic brake unit (10) according to claim 6, **characterized in that** the detachable arrangement (120, 222) comprises
- a threaded element (222) and
- a limit plate (120), which has an opening (224), through which the actuating rod (112) extends.

8. Electrohydraulic brake unit (10) according to claims 6 and 7, **characterized in that** the projecting end of the actuating rod (112) is provided with a thread (220), by means of which the detachable arrangement (120, 222) is connected to the actuating rod (112).

9. Electrohydraulic brake unit (10) according to claim 1, **characterized in that** the unit body (100) has fluid lines that open out into the recess (200).

10. Electrohydraulic brake unit (10) according to claims 2 and 9, **characterized in that** the in-/outflow channels (236, 238) in the hollow cylinder (202), in the assembled state in the unit body (100), coincide with fluid lines (232, 234) that open out into the recess (200).

11. Electrohydraulic brake unit (10) according to claim 10, **characterized in that** each fluid line (232, 234) opening out into the recess comprises at least one throttle device, which is, in particular electromechanically or electromagnetically, adjustable.

12. Electrohydraulic brake unit (10) according to claim 11, **characterized in that** each fluid line (232, 234) comprises a bypass channel that bypasses said fluid line (232, 234) with throttle device.

13. Electrohydraulic brake unit (10) according to claim 12, **characterized in that** at least one of the bypass channels comprises a non-return valve that allows hydraulic fluid to pass substantially unimpeded into the pressure chamber (228) and prevents hydraulic fluid from leaving.

14. Electrohydraulic brake unit (10) according to the preceding claims, **characterized in that** the simulator (52, 53) integrated partially into the unit body (100) is covered by a single- or multiple-piece housing.

## Revendications

1. Unité de freinage électro-hydraulique (10) pour un système de freinage hydraulique à un ou plusieurs circuits permettant le freinage par récupération d'un véhicule routier, comprenant
• un corps d'unité (100) qui présente des composants électro-hydrauliques, tels que des soupapes de commande de fluide à commande électrique (28, 30, 32, 34, 36, 38, 40, 42, 44, 46, 48, 50, 58, 60, 62, 64, 66, 68),
• une pompe d'acheminement de fluide (20) munie d'un moteur d'entraînement de pompe ou similaire et
• un circuit de régulation/commande électronique (ECU) pour la mise à disposition de signaux de commande pour les composants électro-hydrauliques pour moduler la pression hydraulique dans les circuits de freinage,
**caractérisée en ce qu'**un simulateur (52, 53) est intégré dans le corps d'unité (100) et fait partiellement saillie de celui-ci,
et **en ce que** le simulateur (52, 53) présente au moins une unité de simulation (150, 250) qui comprend un ensemble cylindre-piston (250) et un dispositif de ressort de rappel (150), chaque unité de simulation (150, 250) étant placée partiellement dans un évidement (200) ménagé dans le corps d'unité (100), et le dispositif de ressort de rappel (150) étant placé en dehors de l'ensemble cylindre-piston (250) et faisant saillie du corps d'unité.

2. Unité de freinage électro-hydraulique (10) selon la revendication 1, **caractérisée en ce que** l'ensemble cylindre-piston (250) comprend :
• un cylindre creux (202),
• un piston (204) qui peut coulisser dans le cylindre creux (202) et divise ce dernier en deux chambres (228, 230), et
• au moins un canal d'arrivée/de sortie (236, 238) par chambre (228, 230).

3. Unité de freinage électro-hydraulique (10) selon la revendication 1 ou 2, **caractérisée en ce que** le dispositif de ressort de rappel (150) présente au moins un élément ressort (104, 106).

4. Unité de freinage électro-hydraulique (10) selon la revendication 2, **caractérisée en ce que** le dispositif de ressort de rappel (150) est placé en dehors du cylindre creux (202).

5. Unité de freinage électro-hydraulique (10) selon la revendication 2, **caractérisée en ce que** le piston (204) est relié à une tige d'actionnement (112), laquelle est guidée de manière fluidiquement étanche à travers une ouverture (216) dans le cylindre creux (202) et se poursuit en dehors du cylindre creux (202).

6. Unité de freinage électro-hydraulique (10) selon la revendication 5, **caractérisée en ce que** la partie de la tige d'actionnement (112) faisant saillie du cylindre creux (202) est munie d'un dispositif démontable (120, 122) pour permettre l'accouplement du dispositif de ressort de rappel (150) et de l'ensemble cylindre-piston (250) par l'intermédiaire de la tige d'actionnement (112).

7. Unité de freinage électro-hydraulique (10) selon la revendication 6, **caractérisée en ce que** ledit dispositif démontable (120, 222) comprend
• un élément (222) présentant un filetage et
• une plaque de délimitation (120) possédant une ouverture à travers laquelle est guidée la tige d'actionnement (112).

8. Unité de freinage électro-hydraulique (10) selon les revendications 6 et 7, **caractérisée en ce que** l'extrémité saillante de la tige d'actionnement (112) est munie d'un filetage (220) par le biais duquel le dispositif démontable (120, 222) est relié à la tige d'actionnement (112).

9. Unité de freinage électro-hydraulique (10) selon la revendication 1, **caractérisée en ce que** le corps d'unité (100) présente des conduites fluidiques qui débouchent dans l'évidement (200).

10. Unité de freinage électro-hydraulique (10) selon les revendications 2 et 9, **caractérisée en ce que** les canaux d'arrivée/de sortie (236, 238) ménagés dans le cylindre creux (202) coïncident avec les conduites fluidiques (232, 234) débouchant dans l'évidement (200) à l'état monté dans le corps d'unité (100).

11. Unité de freinage électro-hydraulique (10) selon la revendication 10, **caractérisée en ce que** chaque conduite fluidique (232, 234) débouchant dans l'évidement comprend au moins un dispositif d'étranglement réglable électromécaniquement ou électromagnétiquement.

12. Unité de freinage électro-hydraulique (10) selon la revendication 11, **caractérisée en ce que** chaque conduite fluidique (232, 234) comprend un canal de dérivation, lequel contourne ladite conduite fluidique (232, 234) munie d'un dispositif d'étranglement.

13. Unité de freinage électro-hydraulique (10) selon la revendication 12, **caractérisée en ce qu'**au moins un des canaux de dérivation présente un clapet anti-retour, lequel autorise pour l'essentiel la libre pénétration de fluide hydraulique dans la chambre de pression (228) et bloque la sortie de fluide hydraulique.

14. Unité de freinage électro-hydraulique (10) selon l'une des revendications précédentes, **caractérisée en ce que** le simulateur (52, 53) intégré partiellement dans le corps d'unité (100) est recouvert par un boîtier conçu d'une seule pièce ou d'éléments multiples.
